# EUROPÄISCHE PATENTSCHRIFT

(11) **EP 4 408 678 B1**
(45) Veröffentlichungstag und Bekanntmachung des Hinweises auf die Patenterteilung: **06.08.2025**
(21) Anmeldenummer: 22777975.8
(22) Anmeldetag: 18.09.2022
(51) Int. Cl.: B60C 5/12, B60B 21/12, B60C 29/04, B60C 29/02, B60C 29/00, B60B 1/00

(54) **VENTILSYSTEM FÜR EIN SCHLAUCHLOSES RAD**
VALVE SYSTEM FOR A TUBELESS WHEEL
SYSTÈME DE VALVE POUR UNE ROUE SANS CHAMBRE À AIR

(30) Priorität: 27.09.2021 DE 102021124985
(43) Veröffentlichungstag der Anmeldung: 07.08.2024
(73) Patentinhaber: Sport Components AG, 8008 Zürich (CH)
(72) Erfinder: KOBLER, Pius, 8037 Zürich (CH); EGGERT, Dominik, 8046 Zürich (CH); LENZI, Arno, 8134 Adliswil (CH); SPINELLI, Nico, 8047 Zürich (CH)
(74) Vertreter: Rößner, Ulrike
(86) Internationale Anmeldenummer: PCT/EP2022/075872
(87) Internationale Veröffentlichungsnummer: WO 2023/046604

(56) Entgegenhaltungen:
- WO-A1-2015/124239
- DE-U1- 202013 008 966
- US-A1- 2019 263 201

## Beschreibung

Die Erfindung betrifft ein Ventilsystem für ein schlauchloses Rad, wobei das Rad eine Felge und einen Reifen, welche ein mit Luft befüllbares Reifen-/Felgenvolumen ausbilden, sowie eine innerhalb des Reifen-/Felgenvolumens angeordnete Einlage umfasst, wobei das Ventilsystem einen sich entlang einer Ventilachse erstreckenden Ventilschaftkörper mit einem ersten Ende und einem zweiten Ende sowie einem an diesem zweiten Ende anschließenden Ventilfuß umfasst, wobei sich das zweite Ende in dem Reifen-/Felgenvolumen befindet, wenn das Ventilsystem am Rad montiert ist. Die Erfindung betrifft ferner ein schlauchloses Rad mit einem solchen Ventilsystem.

Die Verwendung schlauchloser Reifen bei Fahrrädern gewinnt an Beliebtheit. Ausgehend von der Anwendung bei Mountainbikes setzt sich die sog. "Tubeless"-Technologie immer stärker auch bei anderen Typen von Fahrrädern, wie z.B. Rennrädern, Cyclocross-Rädern und sog. "Gravel Bikes" durch. Im Gegensatz zu herkömmlichen Schlauch-Reifen, bei denen die Luft in einem in den Reifen eingelegten Luftschlauch gehalten ist, bilden bei schlauchlosen Reifen der Reifenmantel und die Felge ein als Hohlvolumen ausgeprägtes Reifen-/Felgenvolumen aus, welches mittels eines in der Felge eingebauten und gegen die Felge abgedichteten Ventils mit Luft befüllbar ist. Zusätzlich wird über dieses Ventil ein flüssiges Dichtmittel in den Rad-Innenraum eingebracht, welches sich im gesamten Rad-Innenraum verteilt und einen die innenliegenden Oberflächen des Reifen-/Felgenvolumens bedeckenden fluid- und gasdichten Dichtungsfilm ausbildet. Da diese Dichtmittel zumeist auf einer Latexflüssigkeit basieren, werden sie in Anspielung auf ihre optische Erscheinung meist als sog. "Dichtmilch" bezeichnet. Schlauchlose Reifen ermöglichen eine Benutzung des Reifens mit einem gegenüber herkömmlichen Schlauchsystemen niedrigeren Innendruck, wodurch die Abroll-Eigenschaften und die Traktion des Reifens auf dem Untergrund verbessert werden. Zusätzlich wird die Pannenanfälligkeit des Reifens vermindert, da kleinere Beschädigungen des Reifenmantels durch den Dichtfilm auf den das Reifen-/Felgenvolumen begrenzenden Oberflächen von innen her abgedichtet werden. Unter einem Reifen-/Felgenvolumen ist also der gesamte mit Luft befüllbare Innenraum des Rades zu verstehen, der durch die Wandungen des Reifens und der Felge gegen die äußere Umgebung abgegrenzt und gegen Luftaustritt abgedichtet ist.

EP 3 107 742 B1 offenbart ein gattungsgemäßes Ventilsystem mit einem selbstabdichtenden Einwegventil in Form von Gummiklappen, welche das Ventilsystem in Bezug auf das Reifen-/Felgenvolumen abdichten und das Entweichen von Luft aus dem Reifen-/Felgenvolumen verhindern, sobald das Ventilherz aus dem Ventilschaftkörper entfernt wird, damit ein Werkzeug zum Messen des Füllstandes des flüssigen Dichtmittels oder zum Einfüllen des Dichtmittels zumindest teilweise in das Reifen-/Felgenvolumen eingeführt werden kann. Hierbei wird eine röhrchenartige Kanüle bzw. Hohlnadel des Werkzeugs entlang der Ventilachse durch einen Innenkanal des Ventilschaftkörpers und durch die das Ventilsystem gegen Luftaustritt abdichtende Anordnung von Gummiklappen hindurch in das Reifen-/Felgenvolumen eingeführt und auf diese Weise eine durchgängige Verbindung für den Austausch des flüssigen Dichtmittels zwischen dem Reifen-/Felgenvolumen und einem externen Flüssigkeits-Vorratsbehältnis des Werkzeugs herstellt. In hierzu analoger Weise kann auch ein bereits im Reifen-/Felgenvolumen befindliches Dichtmittel über diese röhrchenartige Kanüle bzw. Hohlnadel aus dem Reifen-/Felgenvolumen abgesaugt werden, indem eine solche Kanüle bis zum Berühren des Bodens des Reifens eingeführt wird, wobei das Rad so positioniert ist, dass das Ventil an der tiefsten Stelle des Rades liegt (d.h. das Ventil eine "6-Uhr-Position" in Bezug auf den gesamten Umfang des Rades einnimmt) und sich das flüssige Dichtmittel an dieser tiefsten Stelle im Bereich des Ventils sammelt. Dies kann beispielsweise erforderlich sein, wenn das Dichtmittel seine vorgesehene Nutzungsdauer erreicht hat. Unter einer Ventilachse ist in diesem Kontext die Mittelachse des in den Ventilschaftkörper integrierten und in der Regel um diese Mittelachse rotationssymmetrischen Luftkanals zu verstehen, durch den nicht nur die Luft in das Reifen-/Felgenvolumen des Rades gepumpt wird sondern auch die Hohlnadel bzw. Kanüle des vorgenannten Werkzeugs zum Einfüllen des flüssigen Dichtmittels in das Reifen-/Felgenvolumen bzw. Abpumpen oder Absaugen des flüssigen Dichtmittels aus dem Reifen-/Felgenvolumen eingeführt wird.

Zur Verbesserung der Stabilität schlauchloser Räder sowie insbesondere zur Verbesserung des Schutzes gegen sog. "Durchschläge" bei extremer stoßartiger Belastung des Rades, z.B. beim Überfahren von großen Steinen, Bordsteinkanten etc., hat sich die Integration zusätzlicher Durchschlagschutz-Einlagen (sog. "Reifeninserts") in das Reifen-/Felgenvolumen des Rades etabliert. Es handelt sich hierbei um meist bandförmige Streifen aus einem stoßabsorbierenden, aber zugleich hinreichend steifem, porösem Kunststoff, die entlang des Außenumfanges des Rades in den Innenraum des Reifens oder in den Kontaktbereich zwischen Felge und Reifenmantel im Rad-Innenraum eingelegt sind und den Reifen auf diese Weise vor Durchschlägen schützen oder von innen (d.h. vom Rad-Innenraum her) stabilisieren. Solche Durchschlagschutz-Einlagen erschweren das Durchschlagen von in radialer Richtung auf das Rad einwirkenden Stoßbelastungen auf die Felge des Rades und sollen ein Fahren mit niedrigerem Luftdruck ermöglichen. Aus dem Stand der Technik sind zahlreiche Versionen solcher Reifeninserts bekannt. Allerdings sind solche Reifeninserts für die Montage bzw. Demontage des Reifens sowie für das Einfüllen der Dichtflüssigkeit stark hinderlich, da sie die Ventilöffnung im Reifeninneren blockieren und somit das Einfüllen von Dichtflüssigkeit in den Rad-Innenraum mehr oder weniger stark behindern können.

Zwar gibt es Durchschlagschutz-Einlagen mit Öffnungen bzw. Aussparungen, wie z.B. Schlitzen oder Löcher, wie beispielsweise in WO 2018/020081 A1 offenbart. Allerdings dienen diese Öffnungen in erster Linie der Gewichtsreduzierung der Durchschlagschutz-Einlage. Da die Durchschlagschutz-Einlagen in azimutaler bzw. rollender Richtung innerhalb des Reifens verschiebbar sind, können die vorgenannten Öffnungen eine beliebige relative Positionierung in Bezug auf das Ventilsystem des Rades einnehmen. Es ist somit dem Zufall überlassen, welche relative Position eine solche Öffnung in der Durchschlagschutz-Einlage in Bezug auf das Ventilsystem einnimmt. Nur bei sehr günstiger relativer Positionierung zwischen Durchschlagschutz-Einlage und Ventilsystem, bei der eine Öffnung in der Durchschlagschutz-Einlage und das Ventilsystems in etwa zueinander fluchten, kann die Hohlnadel bzw. röhrchenartige Kanüle des vorgenannten Werkzeugs zum Einfüllen oder Extrahieren des Dichtmittels durch die Öffnung der Durchschlagschutz-Einlage hindurch in das Reifen/Felgenvolumen hineingeführt werden. Bei ungünstiger relativer Positionierung blockiert die Durchschlagschutz-Einlage jedoch ein solches Einführen der Hohlnadel bzw. Kanüle in das Reifen-/Felgenvolumen. Somit ist kein zuverlässiges Einbringen von Dichtflüssigkeit in den Reifen möglich.

Ebenso sind z.B. aus US 2007/0017614 A1 Einlagen bekannt, in deren Material kanalartige Strukturen eingearbeitet sind, die eine Verbindung zum Ventilfuß des Ventilsystems aufweisen. Allerdings ist in US 2007/0017614 A1 eingeräumt, dass diese kanalartigen Strukturen durch die Walkbewegungen der Einlage während des Abrollens des Rades im bestimmungsgemäßen Gebrauch sehr starken Verformungen unterworfen sind, die sogar zu deren vollständiger Blockierung führen können, wenn die Einlage derart komprimiert wird, dass der Innendurchmesser der kanalartigen Struktur auf nahezu Null reduziert wird. Derartige Lösungen sind somit nur für solche Reifen geeignet, bei denen lediglich Luft dem Reifen-Innenraum zugeführt werden soll, da diese bei hinreichend großem anliegendem Druck auch durch Spalte oder Poren am blockierten Kanal vorbei in das Reifen-/Felgenvolumen bzw. den Rad-Innenraum gelangen kann. Das Ein- und Ausbringen einer Dichtflüssigkeit mittels einer Hohlnadel bzw. röhrchenartigen Kanüle, wie es bei dem in vorgenannter EP 3 107 742 B1 offenbarten selbstabdichtenden Ventilsystem erforderlich ist, ist mit einer solchen Einlage jedoch unmöglich.

Ferner ist aus DE 20 2013 008 966 U1 ein Fahrreifen mit einem zusätzlichen Innenreifen bekannt, der im montierten und aufgepumpten Zustand innerhalb des Fahrreifens auf der Felge angeordnet ist, wobei die Reifenwülste des Innenreifens die Reifenwülste des Fahrreifens von innen her gegen die Felgenhörner andrücken und auf diese Weise eine Abdichtung des Innenraums des Fahrreifens gegen Luftverlust bewirken. Mittels eines Zweiwegeventils mit zwei verschiedenen Ausgängen lassen sich die Innenräume sowohl des Fahrreifens als auch des Innenreifens unabhängig voneinander mit Luft befüllen. Die Luft-Zuleitung in den Innenraum des Fahrreifens ist dabei durch den Innenraum und den Mantel des Innenreifens geführt. Durch Walkbewegungen beim bestimmungsgemäßen Gebrauch des Fahrreifens kommt es zu Verformungen und Relativbewegungen des Innenreifens in Bezug auf das in der Felge fixierte Luft-Zuführungsventil. Deshalb ist die Luft-Zuleitung in den Innenraum des Fahrreifens als flexibler und verformbarer Verbindungsschlauch zwischen Ventil und Durchtrittsöffnung im Mantel des Innenreifens ausgeführt. Durch einen solchermaßen verformten Verbindungsschlauch kann zwar noch Luft hindurchgedrückt werden, jedoch ist das Ein- und Ausbringen einer Dichtflüssigkeit mittels einer Hohlnadel bzw. röhrchenartigen Kanüle durch das Ventilsystem nicht möglich. Dies gilt erst recht, wenn die Durchschlagschutz-Einlage - im Gegensatz zu dem gegen die Felge fixierten Innenreifen der DE 20 2013 008 966 U1 - keinerlei Fixierung in Bezug in Bezug auf den sie umgebenden Reifen aufweist und somit sehr starke Verschiebungen in azimutaler bzw. rollender Richtung zwischen Durchschlagschutz-Einlage und Reifen möglich sind.

EP 2 173 572 B1 offenbart ebenfalls einen Fahrreifen mit einem zusätzlichen Innenreifen, der im montierten und aufgepumpten Zustand die Reifenwülste des Fahrreifens von innen her gegen die Felgenhörner abdichtet. Mittels eines starren Sicherungsbolzens ist der Fahrreifen gegen die Felge fixiert, so dass dieser sich auch bei großen Antriebsdrehmomenten, wie sie typischerweise bei motorisierten Fahrzeugen auftreten, nicht gegen die Felge verdrehen kann. Zusätzlich kann mittels eines Luftkanals im Inneren des Sicherungsbolzens Luft in den Fahrreifen eingepumpt werden. Das in den Innenraum des Fahrreifens ragende Ende des Sicherungsbolzens ist mit einer Sicherungsplatte verbunden. Mittels einer gegen die Felge wirkenden Rändelmutter kann auf den Sicherungsbolzen eine Zugkraft eingeleitet werden, wodurch die Sicherungsplatte den Fahrreifen unverrückbar gegen die Felge klemmt. Mittels Deflektor-Elementen ist sichergestellt, dass es zu keinen Konflikten zwischen dem Innenreifen und dem in den Innenraum des Fahrreifens hineinragenden Sicherungsbolzen kommt und der Innenreifen somit vor Beschädigungen durch den Sicherungsbolzen geschützt ist. Im Ergebnis befindet sich der Innenreifen innerhalb eines aus Sicherungsplatte, Fahrreifen und Felge gebildeten starren Rahmens und kann insbesondere keine in radialer Richtung auf das Rad einwirkenden Stoßbelastungen absorbieren. Diese würden stattdessen über die Sicherungsplatte unmittelbar auf die Felgenhörner abgeleitet, wobei der zwischen Felge und Sicherungsplatte eingeklemmte Reifen keine nennenswerte Dämpfung des Stoßes bewirken kann. Somit kann der Innenreifen nicht als Durchschlagschutz wirken, sondern dient ausschließlich der Abdichtung des Fahrreifens gegen die Felge. Zudem ist eine solche Sicherungsplatte im Reifeninnenraum schwierig zu montieren und übt eine den Rundlauf des Rades beeinträchtigende Unwucht aus.

Schließlich offenbart die US 2019/263201 A1 ein Ventilsystem für ein schlauchloses Rad mit Felge und Reifen, di ein mit Luft befüllbares Reifen-/Felgenvolumen ausbilden und das eine innerhalb dieses Volumens angeordnete Durchschlagschutz-Einlage umfasst. Das Ventilsystem umfasst eine Luftzuleitung in dieses Volumen, die schwer verformbar ist, jedoch nicht gegen Verstopfen beim Einfüllen von Dichtflüssigkeit durch diese Luftzuleitung geschützt ist. Um dann erneute Befüllungen des Reifen-/Felgenvolumens zu gewährleisten, weist diese Luftzuleitung deshalb weitere seitliche mit einer Muffe geschützte Öffnungen auf.

Die Aufgabe der vorliegenden Erfindung besteht somit darin, ein gattungsgemäßes Ventilsystem für ein schlauchloses Rad bereitzustellen, welches die vorgenannten Nachteile überwindet. Insbesondere soll das Ventilsystem das Einführen einer röhrchenartigen Kanüle bzw. Hohlnadel eines Werkzeugs zum Einfüllen oder Extrahieren von Dichtflüssigkeit durch das Ventilsystem hindurch in das Reifen-/Felgenvolumen vereinfachen. Behinderungen durch das Ventilsystem verlegende bzw. blockierende Durchschlagschutz-Einlagen sollen vermieden werden.

Diese Aufgabe wird dadurch gelöst, dass der Ventilfuß einen sich stetig entlang der Ventilachse in Richtung auf das Reifen-/ Felgenvolumen vergrößernden Außenumfang unter Ausbildung eines verdickten Ventilfuß-Endes aufweist und das Ventilsystem ferner eine Hülse mit einem ersten Ende und einem zweiten Ende umfasst, wobei das erste Ende der Hülse am verdickten Ventilfuß-Ende anschließt und sich die Hülse von dort entlang der Ventilachse in einer vom Ventilschaftkörper weg orientierten Richtung erstreckt.

Ein solcher Ventilfuß mit einem sich entlang der Ventilachse in Richtung auf das Reifen-/Felgenvolumen stetig vergrößernden Außenumfang bildet eine bevorzugt tropfen- oder kegelstumpfförmige Außenkontur mit einem ersten, dem Ventilschaftkörper zugewandten verjüngten Ventilfuß-Ende sowie einem zweiten verdickten Ventilfuß-Ende an der hierzu entgegengesetzten Seite des Ventilfußes aus.

Der Ventilfuß ist derart mit dem Ventilschaftkörper verbunden, dass der Ventilfuß - in einem am Rad montierten Zustand des Ventilsystems - im Bereich zwischen seinem verjüngten und seinem verdickten Ende in die Ventilaufnahme der Felge eingreift. Auf diese Weise sichert der Ventilfuß nicht nur den Ventilschaftkörper gegen ein axiales Herausziehen aus der Ventilaufnahme-Öffnung der Felge, sondern dichtet zugleich auch den Spalt zwischen Ventilaufnahme-Öffnung und Ventilschaftkörper gegen Luftaustritt aus dem Reifen-/Felgenvolumen ab, sobald der Ventilschaftkörper im am Rad montierten Zustand mittels einer Schraubmutter unter Zug-Vorspannung gegen die Felge fixiert ist.

Im Hinblick auf die durch die Erfindung zu lösende Aufgabe ist jedoch von besonderer Relevanz, dass am verdickten Ventilfuß-Ende ein Anschlusspunkt für eine das Ventilsystem in das Reifen-/Felgenvolumen hinein verlängernde Hülse ausgebildet ist. Im am Rad montierten Zustand kann diese Hülse durch Ausnehmungen einer im Reifen-/Felgenvolumen des Rades eingelegten Durchschlagschutz-Einlage hindurchgeführt werden, so dass zwar die freie Bewegbarkeit der Einlage in azimutaler bzw. rollender Richtung des Rades, nicht aber deren freie Bewegbarkeit in radialer Richtung des Rades eingeschränkt oder begrenzt wird. Auf diese Weise wird ein freier, geradliniger Durchgang für eine (von außen durch das Ventilsystem einführbare) Kanüle durch eine im Reifen-/Felgenvolumen des Rades eingelegte Durchschlagschutz-Einlage geschaffen, die von dieser nicht überdeckt oder blockiert werden kann, und ohne dass sich dies negativ auf die Dämpfungsfähigkeit der Durchschlagschutz-Einlage auswirkt. Das gesamte Ventilsystem mit Hülse stützt sich ausschließlich gegen die Felge des Rades ab.

Die Hülse schließt am Außenumfang des verdickten Ventilfuß-Endes an. Somit entspricht der freie Innendurchmesser der Hülse in etwa dem Außendurchmesser des verdickten Ventilfuß-Endes. Auf diese Weise wird eine besonders einfache und stabile Konstruktion des Ventilsystems erreicht, welche auf der Realisierung einer Hülse mit großem Innendurchmesser beruht. Hierdurch wird nicht nur ein hinreichend großer freier Durchgang für eine einzuführende Kanüle bzw. Hohlnadel geschaffen, sondern insbesondere auch die Stabilität der Hülse gegen Verbiegen oder Knicken bei auf die Hülse einwirkenden äußeren Belastungen vergrößert. Zudem werden auf diese Weise die im Kontaktbereich zwischen Hülse und Ventilfuß wirksamen Kräfte reduziert, was die Gefahr von Lockerungen oder Brüchen in diesem Kontaktbereich reduziert. Im Ergebnis werden nicht nur die Stabilität der Hülse als solcher, sondern auch die Stabilität und Dauerfestigkeit von deren Verbindung mit dem restlichen Ventilsystem verbessert.

Mittels einer solchen Hülse ist das Ventilsystem entlang der Ventilachse in das Reifen-/Felgenvolumen hinein verlängerbar, wobei die Hülse in einen mechanisch wirksamen Eingriff mit der Durchschlagschutz-Einlage gebracht werden kann. Die Einlage weist hierzu in bevorzugter Weise mindestens eine Durchtrittsöffnung auf, deren Kontur und Dimensionierung an die Kontur und Dimensionierung der Hülse angepasst ist. Auf diese Weise wird die (in Bezug auf die Drehachse des Rades) azimutale Verschiebbarkeit der Einlage gegenüber der Felge und dem Ventilsystem deutlich eingeschränkt sowie eine mechanische Fixierung der Durchschlagschutz-Einlage innerhalb des Rades erreicht. Auf diese Weise wird eine weitestgehend geradlinige und durchgängige Verbindung zwischen dem Ventilfuß bzw. dem Ventilschaftkörper und dem Reifen-/Felgenvolumen des Rades erzielt, die durch die Durchschlagschutz-Einlage nicht blockierbar ist, so dass die Hohlnadel bzw. röhrchenartige Kanüle eines Werkzeugs zum Einfüllen bzw. Absaugen von Dichtmittel in einfacher Weise, d.h. ohne mechanische Blockierungen oder Widerstände durch die Einlage, tief in das Reifen-/Felgenvolumen des Rades hinein geschoben werden kann, bis sie den Reifen berührt. Mittels des erfindungsgemäßen Ventilsystems ist somit gewährleistet, dass sich die Durchschlagschutz-Einlage in einer für das Einführen der Hohlnadel bzw. röhrchenartigen Kanüle lagerichtigen Positionierung befindet. Die durch die erfindungsgemäße Ausführung des Ventilsystems erreichte Stabilität nicht nur der Hülse an sich gegen Verbiegen oder Knicken bei auf die Hülse einwirkenden Belastungen, sondern auch die verbesserte Dauerfestigkeit von deren konstruktivem Anschluss an das Ventilsystem unter solchen auf die Hülse induzierten Biegebelastungen, sind wesentliche Voraussetzungen dafür, dass das erfindungsgemäße Ventilsystem die in schlauchlosen Reifen eingelegten Durchschlagschutz-Einlagen auf konstruktiv einfache Weise gegen unerwünschte azimutale Relativbewegungen in Bezug auf die Felge fixieren und somit ein Überdecken des Ventils durch die Einlage vermeiden kann. Die Erfindung ermöglicht ferner, dass das Ventilsystem ausschließlich im Kontaktbereich mit der Felge mechanisch fixiert ist und die in das Reifen-/Felgenvolumen reichende Hülse als ein freies Ende des Ventilsystems ausführbar ist. Auf diese Weise wird eine Zwei-Punkt-Lagerung des Ventilsystems, insbesondere eine mechanische Fixierung im Bereich des zweiten Endes der Hülse vermieden und der Reifen- /Felgenraum kann frei von zusätzlichen Bauteilen bleiben. Die von der Erfindung angestrebte Erleichterung beim Einfüllen oder Entnehmen von Dichtflüssigkeit wird ohne negative Auswirkungen auf die dynamischen Laufeigenschaften des schlauchlosen Rades erreicht.

Ferner werden durch die erfindungsgemäße Hülse die auf die Einlage bei einer Rollbewegung des Rades einwirkenden Kräfte, welche eine azimutale Verschiebung der Durchschlagschutz-Einlage relativ zur Felge bzw. zum Reifen bewirken, aufgenommen und in Richtung auf den Ventilfuß und damit in das Ventilsystem abgeleitet. Hierbei ist die Längserstreckung der Hülse derart zu dimensionieren, dass die Berührfläche zwischen Durchschlagschutz-Einlage und Hülse für die Übertragung der in azimutaler Richtung wirksamen Kraftkomponenten ausreichend dimensioniert ist. Gemäß der erfinderischen Grundidee ist nur ein Berührkontakt zwischen der Außenfläche der Hülse und der Durchtrittsöffnung in der Durchschlagschutz-Einlage vorgesehen, jedoch keine in Richtung der Ventilachse wirksame Kraftübertragung zwischen Hülse und Einlage. Allerdings können gemäß möglicher Ausführungsvarianten der Erfindung die Durchtrittsöffnung in der Einlage gegenüber den Außenabmessungen der Hülse unterdimensioniert oder die Außenfläche der Hülse aufgeraut sein, so dass im Kontaktbereich zwischen Einlage und Hülse eine die relative Bewegung beider Teile gegeneinander hemmende Reibpaarung entsteht.

In bevorzugter Weise ist die Längserstreckung der Hülse (bezogen auf eine zur Ventilachse parallele Richtung) derart ausgeführt, dass die Hülse in einem zum bestimmungsgemäßen Gebrauch am Rad montierten Zustand die Durchschlagschutz-Einlage vollständig durchdringt. Hierunter ist zu verstehen, dass das zweite Ende der Hülse auf der vom Ventilfuß bzw. von der Felge abgewandten konkaven Innenseite der Durchschlagschutz-Einlage einen in das Reifen-/Felgenvolumen hineinragenden Überstand ausbildet.

In bevorzugter Weise ist am verdickten Ventilfuß-Ende eine Anordnung von Gummiklappen ausgeführt, die die Austrittsöffnung des Luftkanals am zweiten Ende des Ventilschaftkörpers überdecken und gegen Luftdurchtritt abdichten. Beim Einpumpen von Luft in das Reifen-/Felgenvolumen sowie beim Einschieben einer Kanüle bzw. Hohlnadel durch den Luftkanal in das Reifen-/Felgenvolumen geben die Gummiklappen aufgrund ihrer flexiblen werkstofflichen und/oder konstruktiven Ausprägung den Luftkanal frei. Andernfalls bleibt dieser verschlossen.

Es ist für den Fachmann ersichtlich, dass es für die Realisierung der erfindungsgemäßen Idee unerheblich ist, ob der Ventilfuß und der Ventilschaftkörper als jeweils eigenständige Bauteile ausgeführt sind oder ob Ventilfuß und Ventilschaftkörper ein integrales Bauteil, d.h. ein Bauteil ohne konstruktive Trennung zwischen beiden Teilkörpern, ausbilden. Eine solche strukturelle Modifikation ist ohne Auswirkung auf die in Bezug auf die Erfindungsidee relevanten funktionalen Eigenschaften des Ventilsystems. Der Fachmann erkennt auch, dass bei einem aus einem zäh-elastischen Werkstoff gefertigten Ventilfuß sogar eine leichte Winkel-Schrägstellung der Längsachse der am verdickten Ventilfuß-Ende anschließenden Hülse in Bezug auf die Ventilachse möglich ist, ohne dass hierdurch die Anwendbarkeit und Funktionalität der Erfindungsidee beeinträchtigt wird. Die Erfindung erstreckt sich somit auch auf solche Ventilsysteme, bei denen auf Grund der Verformungsfähigkeit des Ventilfußes oder der Hülse eine Winkelabweichung zwischen der Ventilachse und der Längsachse der Hülse möglich ist.

Gemäß einer ersten Ausführungsvariante ist das erste Ende der Hülse formschlüssig mit dem Ventilfuß verbunden. Eine solche formschlüssige Verbindung ist von besonderem Vorteil, da sie eine steckbare Montage des Ventilsystems ohne besondere Werkzeuge oder Hilfsmittel ermöglicht.

Hierbei sieht die Erfindung vor, dass das erste Ende der Hülse einen sich zum Ventilfuß hin konisch verjüngenden ersten Halteabschnitt aufweist. Dieser wirkt zusammen mit einem hierzu korrespondierenden ersten Halteabschnitt des Ventilfuß, der in etwa im Übergangsbereich zwischen dem verjüngtem Ventilfuß-Ende und dem verdickten Ventilfuß-Ende angeordnet ist. Auf diese Weise wird ein erstes Haltemittel ausgebildet, das die Hülse in einer ersten axialen Richtung (bezüglich der Ventilachse) relativ zum Ventilfuß fixiert. Der geringste Innendurchmesser an der Spitze des ersten Halteabschnitts der Hülse ist derart dimensioniert, dass er einen Wert zwischen dem Außendurchmesser des Ventilschaftkörpers (üblicherweise ca. 6 mm) und dem maximalen Außendurchmesser des Ventilfußes (üblicherweise ca. 11 mm) aufweist.

Hierzu ergänzend sieht die Erfindung vor, dass die Hülse einen zum ersten Halteabschnitt und in Richtung auf das zweite Ende der Hülse hin beabstandeten zweiten Halteabschnitt aufweist, der analog zum ersten Halteabschnitt den freien Querschnitt im Inneren der Hülse verkleinert. Dieser wirkt zusammen mit einem hierzu korrespondierenden zweiten Halteabschnitt am verdickten Ventilfuß-Ende. Auf diese Weise ist ein zweites Haltemittel realisiert, das die Hülse in einer zur vorgenannten ersten axialen Richtung entgegengesetzten zweiten axialen Richtung (bezüglich der Ventilachse) relativ zum Ventilfuß fixiert. Gemäß einer besonders vorteilhaften Ausprägung kann dieses zweite Haltemittel in der Art einer Schnappverbindung ausgeführt sein, welches bei einer zur Ventilachse parallelen Relativbewegung zwischen Hülse und Ventilfuß einschnappt. Beispielsweise kann zur Montage eines erfindungsgemäßen Ventilsystems die Hülse über vom Ventilschaftkörper her über den Ventilfuß hin gezogen werden, wobei der zweite Halteabschnitt solange über den Ventilfuß gezogen wird (und hierdurch eine Aufweitung und Verformung erfährt), bis der zweite Halteabschnitt den Ventilfuß vollständig passiert hat und in seine Ausgangsform zurückfedert. Besonders vorteilhaft ist hierbei der freie Querschnitt des ersten Haltemittels kleiner dimensioniert als der freie Querschnitt des zweiten Haltemittels, so dass das erste Haltemittel in der Art eines Anschlags die Verschiebbarkeit der Hülse in Bezug auf den Ventilfuß begrenzt. Dies wird auch dadurch unterstützt, dass das erste Haltemittel einen größeren Widerstand gegen Formänderung durch Aufweiten des Querschnitts des Haltemittels als das zweitß nach dem vorgenannten Einschnappen des zweiten Haltemittels ein größerer Verschiebe-Widerstand entgegenwirkt.

Durch das stabilisierende Zusammenwirken von erstem und zweitem Haltemittel wird auch ein Verkippen der Hülse in Bezug auf den Ventilfuß bzw. den Ventilschaftkörper verhindert. Dies wird wirksam dadurch unterstützt, dass der Ventilfuß zwischen erstem und zweitem Halteabschnitt einen Zwischenabschnitt mit zylindrischer Umfangsfläche aufweist. Dieser Zwischenabschnitt stellt zugleich den Bereich des maximalen Außenumfangs des verdickten Ventilfuß-Endes dar. Ein solcher zylindrischer Zwischenabschnitt am Ventilfuß stellt eine zusätzliche Abstützungsfläche für die Hülse dar und wirkt einem Verkippen der Hülse in Bezug auf den Ventilfuß entgegen. Es ist für den Fachmann ersichtlich, dass es im Kontext der Erfindungsidee nicht auf die konkrete Formgestaltung des Querschnitts der Umfangsfläche des Zwischenabschnitts ankommt und hierfür - neben einer zylindrischen Form - auch andere, ähnliche Formen in Betracht kommen können.

Hierzu alternativ oder ergänzend kann das erste Ende der Hülse kraftschlüssig mit dem Ventilfuß verbunden sein. Dies kann beispielsweise dadurch erreicht sein, dass zumindest ein Teilbereich der Hülse beim Verbinden mit dem Ventilfuß unter Formänderung aufgedehnt wird und diese Formänderung auch in der fertig montierten relativen Positionierung der Hülse am Ventilfuß nicht vollständig aufgehoben wird, wodurch sich ein Reibschluss zwischen Hülse und Ventilfuß einstellt. Ergänzend können Hülse und Ventilfuß miteinander durch Verkleben oder Reibschweißen gefügt werden.

Es ist in Bezug auf das erfinderische Grundkonzept besonders vorteilhaft, wenn die Hülse und der Ventilfuß einteilig ausgeführt sind. Auf diese Weise ist die Abdichtbarkeit des Ventilsystems gegen Fluid- oder Gas-Durchtritt deutlich verbessert. Zudem ist ein solches Ventilsystem in besonders einfacher Weise mittels eines Mehrkomponenten-Spritzgussverfahrens herstellbar, so dass im Ergebnis der Ventilfuß und die Hülse aus Werkstoffen mit unterschiedlichen Materialeigenschaften ausgeführt sind. Im Kontext einer solchen einteiligen Ausführung von Hülse und Ventilfuß muss die Außenkontur der Hülse nicht zwingend kreisförmig bzw. rund sein. Es gibt in der Praxis auch häufig Ventilsysteme mit einem viereckig konturierten Ventilfuß. Grundsätzlich hat die Formgebung der Außenkontur der Hülse keinen Einfluss auf die Funktion der Erfindung. Es ist aber bei einteiliger Ausführung sinnvoll, wenn die Hülse die Außenkontur des Ventilfußes übernimmt.

Gemäß einer weiteren zweckmäßigen Ausgestaltung der Erfindungsidee ist die Hülse mittels eines Stützkörpers ausgesteift. Der Stützkörper muss hierbei nicht notwendigerweise aus einem steiferen Material als die Hülse bestehen, wenngleich hierfür eine Material-Paarung von Hartgummi-Material mit Shorehärte 50D für den Stützkörper und Weichgummi mit Shorehärte 45A für die Hülse (oder alternativ Shorehärte 85A für den Stützkörper und Shorehärte 60A für die Hülse) besonders geeignet ist. Die aussteifende Wirkung wird auch bei identischem Material durch die Vergrößerung des von Hülse und Stützkörper eingenommenen gemeinsamen Querschnitts (und damit des Trägheitsmoments gegen Torsion) erreicht. Der Stützkörper kann hierbei entweder als Inlay im Innern der Hülse als auch als eine äußere, die Hülse stützende Struktur ausgeführt sein.

Die Erfindungsidee wird wirksam dadurch unterstützt, dass das zweite Ende der Hülse einen den Außenumfang der Hülse vergrößernden Halterand aufweist. Auf diese Weise ist die relative Bewegbarkeit der Einlage in Bezug auf das Ventilsystem noch weitergehend eingeschränkt. Insbesondere verhindert ein solcher Halterand eine axiale Bewegung der Einlage in Richtung auf das zweite Ende der Hülse, welche dazu führen könnte, dass die stabilisierende Wirkung des Ventilsystems auf die Einlage beeinträchtigt wird oder der Wirk-Kontakt zwischen Einlage und Hülse durch ein Abrutschen der Einlage von der Hülse sogar vollständig verloren geht.

Die Erfindung betrifft auch ein schlauchloses Rad mit einem Ventilsystem nach einem der vorgenannten technischen Merkmale.

Die vorliegende Erfindung wird nachfolgend anhand eines Ausführungsbeispiels und dazugehöriger Zeichnungen näher erläutert. Es zeigen:
- Figur 1:: Übersichtsdarstellung der Bestandteile eines schlauchlosen Rades mit einem erfindungsgemäßen Ventilsystem gemäß einer ersten Ausführungsform
- Figur 2:: Querschnittsdarstellung eines erfindungsgemäßen Ventilsystems gemäß einer zweiten Ausführungsform
- Figur 2.1:: Detail-Ausschnitt aus Figur 2 (zweite Ausführungsform) in vergrößerter Ansicht
- Figur 3:: Querschnittsdarstellung eines erfindungsgemäßen Ventilsystems gemäß einer dritten Ausführungsform
- Figur 4:: Querschnittsdarstellung eines erfindungsgemäßen Ventilsystems gemäß einer vierten Ausführungsform
- Figur 5:: Querschnittsdarstellung eines erfindungsgemäßen Ventilsystems gemäß einer fünften Ausführungsform
- Figur 6:: Querschnittsdarstellung eines erfindungsgemäßen Ventilsystems gemäß einer fünften Ausführungsform, zusammen mit Werkzeug zum Einfüllen eines Dichtmittels

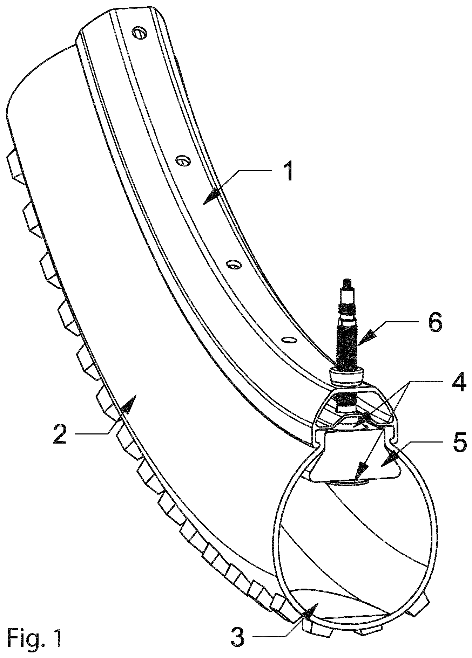

In Figur 1 sind die Bestandteile eines schlauchlosen Rades dargestellt, welches neben einer Felge 1 und einem Reifen 2 auch ein erfindungsgemäßes Ventilsystem gemäß einer ersten Ausführungsform zum Befüllen des Rades mit Luft umfasst. Die Felge 1 und der Mantel des Reifens 2 umschließen ein Reifen-/Felgenvolumen 10, welches mittels eines flüssigen Dichtmittels 3 von innen her gegen Luftaustritt abdichtbar ist. Das Dichtmittel wird mittels eines in Figur 1 nicht dargestellten Werkzeugs in das Reifen-/Felgenvolumen 10 eingefüllt, indem eine Hohlnadel dieses Werkzeugs soweit durch einen Luftkanal im Inneren des Ventilsystems hindurchgeführt wird, bis die freie Spitze der Hohlnadel einen ungehinderten Austritt des durch die Hohlnadel zuführbaren Dichtmittels in das Reifen-/Felgenvolumen 10 ermöglicht. In hierzu analoger Weise kann auch Dichtmittel, das seine Nutzungsdauer erreicht hat, aus dem Reifen-/Felgenvolumen 10 mittels einer solchen Hohlnadel wieder abgesaugt oder abgepumpt werden. Ferner ist im Reifen-/Felgenvolumen 10 eine sich über den gesamten Umfang des Rades erstreckende Durschlagschutz-Einlage 5 eingelegt, die einen Schutz des Rades gegen Durchschläge bewirkt, welche durch starke stoßartige Belastungen des Rades, z.B. beim Überfahren von Bordsteinen o.ä., hervorgerufen werden können. Solche Einlagen können unterschiedlichster Art sein. Die in Figur 1 beispielhaft dargestellte Durchschlagschutz-Einlage 5 füllt das Felgen-/Reifenvolumen 10 nicht nur im Bereich des Reifenmantels aus, sondern erstreckt sich auch in den Freiraum zwischen den einander gegenüberliegenden Felgenhörnern der Felge 1, so dass die in die Felgenhörner eingreifenden Wülste des Reifens 2 durch die Einlage 5 von innen gegen die Felgenhörner gehalten sind. Das Ventilsystem umfasst einen Ventilschaftkörper 6, einen (in Figur 1 nicht sichtbaren) Ventilfuß sowie eine Hülse 4, die eine durch die Einlage 5 hindurchführende Verlängerung der Ventilachse des Ventilsystems in das freie, d.h. von der Einlage 5 nicht ausgefüllte Reifen-/Felgenvolumen 10 ausbildet.

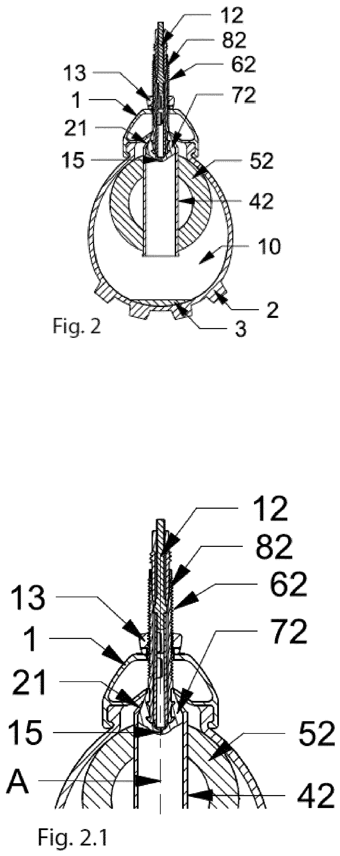

In Figuren 2 und 2.1 ist eine zweite Ausführungsform des erfindungsgemäßen Ventilsystems dargestellt. Dieses ist in ein schlauchloses Rad eingebaut, welches eine Felge 1, einen Reifen 2 sowie eine Durchschlagschutz-Einlage 52 in Form eines ringförmigen Torus umfasst. Die Felge 1 und der Mantel des Reifens 2 umschließen ein Reifen-/Felgenvolumen 10, welches mittels eines flüssigen Dichtmittels 3 von innen her gegen Luftaustritt abdichtbar ist. Die Durchschlagschutz-Einlage 52 weist einen Querschnitt auf, der in ringförmiger Weise einen innenliegenden Hohlraum umschließt.

Die Durchschlagschutz-Einlage 52 erstreckt sich - anders als die in Figur 1 dargestellte Durchschlagschutz-Einlage - nicht in den Bereich zwischen den Felgenhörnern, sondern lässt diesen frei. Das Ventilsystem 62 umfasst einen Ventilschaftkörper 82, einen Ventilfuß 72 sowie eine Hülse 42, welche durch den gesamten Querschnitt der Durchschlagschutz-Einlage 52 geführt ist und auf diese Weise eine Verlängerung des Ventilsystems entlang der Ventilachse durch die Durchschlagschutz-Einlage 52 ausbildet. Zu diesem Zweck weist die Durchschlagschutz-Einlage 52 Durchgangsöffnungen auf, deren Abmessungen an die Maße der Hülse 42 angepasst sind. Der Ventilfuß 72 weist einen sich entlang der Ventilachse in Richtung auf das Reifen-/Felgenvolumen 10 stetig vergrößernden Außenumfang auf und bildet hierdurch eine tropfenförmige Außenkontur mit einem ersten, dem Ventilschaftkörper 82 zugewandten verjüngten Ventilfuß-Ende sowie einem zweiten, hierzu beabstandeten verdickten Ventilfuß-Ende aus. Das verjüngte Ventilfuß-Ende dichtet zum einen den Spalt zwischen dem Ventilschaftkörper 82 und der umgebenden Öffnung der Ventilaufnahme im inneren Felgenbett der Felge 1, und sichert zum anderen den Ventilschaftkörper 82 gegen ein axiales Herausziehen aus der Ventilaufnahme-Öffnung. Zusätzlich ist der Ventilschaftkörper 82 mittels einer schraubbaren Mutter 13 unter Zug-Vorspannung von außen gegen die Felge 1 fixiert. Eine das Ventilsystem in das Reifen-/Felgenvolumen 10 hinein verlängernde Hülse 42 ist am verdickten Ventilfuß-Ende mit dem Ventilfuß 72 verbunden. Hierzu ist die Hülse 42 an ihrem ersten Ende mittels eines sich konisch zum Ventilfuß 72 hin verjüngenden ersten Halteabschnittes 21 formschlüssig mit einem hierzu korrespondierenden ersten Halteabschnitt des Ventilfuß 72 verbunden, der in etwa im Übergangsbereich zwischen dem verjüngtem Ventilfuß-Ende und dem verdickten Ventilfuß-Ende angeordnet ist. Dieser erste Halteabschnitt 21 verhindert, dass sich die Hülse 42 mittels einer zur Ventilachse parallelen und vom Ventilschaftkörper 82 weg orientierten Relativbewegung vom Ventilfuß 72 löst. Der Innendurchmesser der Hülse 42 ist gleich oder etwas größer als der maximale Außendurchmesser des Ventilfußes 72 an dessen verdicktem Ventilfuß-Ende. Hierdurch wird nicht nur ein hinreichend großer freier Durchtrittsraum für eine einzuführende Kanüle bzw. Hohlnadel geschaffen, sondern insbesondere auch die Stabilität der Hülse gegen Verbiegen oder Knicken bei radial auf die Hülse einwirkenden Belastungen vergrößert. Zudem werden auf diese Weise die im Kontaktbereich zwischen Hülse und Ventilfuß wirksamen Kräfte reduziert, was die Gefahr von Lockerungen oder Brüchen in diesem Kontaktbereich reduziert. Im Ergebnis werden nicht nur die Stabilität der Hülse als solcher, sondern auch die Stabilität und Dauerfestigkeit von deren Verbindung mit dem restlichen Ventilsystem verbessert.

Darüber hinaus ist die Hülse 42 durch einen Zwischenabschnittmit zylindrischem Außenumfang, der durch den Bereich des maximalen Außenumfangs des verdickten Ventilfuß-Endes des Ventilfußes 72 gebildet ist, nicht nur reibschlüssig gegen Verschieben entlang der Ventilachse fixiert, sondern auch gegen ein Verkippen in Bezug auf die Ventilachse abgestützt.

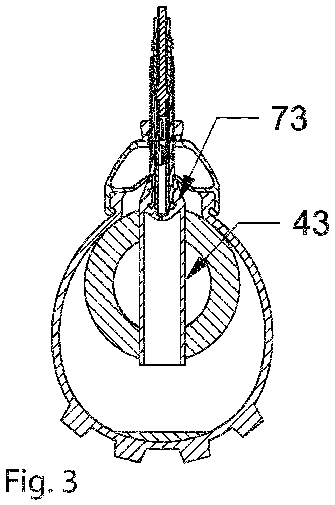

Gemäß einer in Figur 3 dargestellten dritten Ausführungsform des erfindungsgemäßen Ventilsystems sind die Hülse 43 und der Ventilfuß 73 einteilig, d.h. als ein integrales Bauteil, ausgeführt. Die Hülse 43 ist am Ventilfuß 73 als ein das Ventilsystem entlang der Ventilachse verlängerndes Element angeformt; Hülse 43 und Ventilfuß 73 sind im Mehrkomponenten-Spritzgussverfahren in einem gemeinsamen Fertigungsschritt herstellbar. Hierbei weist die Hülse 73 dieselbe Außenkontur wie der Ventilfuß 73 auf. Eine solche einteilige Ausführung von Hülse 43 und Ventilfuß 73 verbessert die Abdichtung des Ventilsystems gegen den Durchtritt von Fluiden.

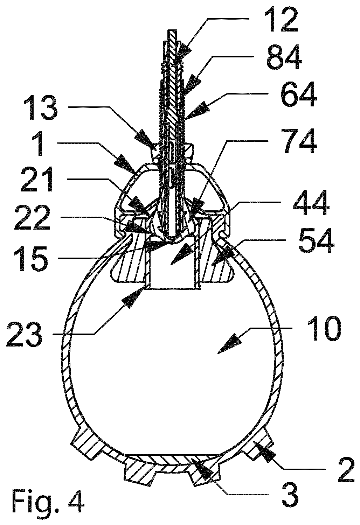

In Figur 4 ist eine vierte Ausführungsform des erfindungsgemäßen Ventilsystems dargestellt. Dieses ist in ein schlauchloses Rad eingebaut, welches eine Felge 1, einen Reifen 2 sowie eine Durchschlagschutz-Einlage 54 umfasst. Die Felge 1 und der Mantel des Reifens 2 umschließen ein Reifen-/Felgenvolumen 10, welches mittels eines flüssigen Dichtmittels 3 von innen her gegen Luftaustritt abdichtbar ist. Die Durchschlagschutz-Einlage 54 weist einen - im Vergleich zu der in Figur 2 dargestellten Durchschlagschutz-Einlage 52 - kompakten Querschnitt auf, der sich auch in einen Teilbereich zwischen den Felgenhörnern erstreckt und dort die Wülste des Reifens 2 gegen die Felgenhörner fixiert. Analog wie bei den vorgenannten ersten und zweiten Ausführungsformen umfasst auch das Ventilsystem 64 einen Ventilschaftkörper 84, einen Ventilfuß 74 sowie eine Hülse 44, welche durch den gesamten Querschnitt der Durchschlagschutz-Einlage 54 geführt ist und auf diese Weise eine Verlängerung des Ventilsystems entlang der Ventilachse durch die Durchschlagschutz-Einlage 54 ausbildet. Zu diesem Zweck weist die Durchschlagschutz-Einlage 54 Durchgangsöffnungen auf, deren Abmessungen an die Maße der Hülse 44 angepasst sind. Die Längserstreckung der Hülse 44 ist an die Dimensionierung der Durchschlagschutz-Einlage 54 in Bezug auf die Ventilachse angepasst und somit kürzer als die in Figur 2 dargestellte Hülse 42 gemäß der zweiten Ausführungsform. Die Hülse 44 ist an ihrem ersten Ende mittels eines sich zum Ventilfuß 74 hin verjüngenden kegelstumpfförmigen ersten Halteabschnittes 21 formschlüssig mit dem Ventilfuß 74 verbunden. Dieser vorgenannte erste Halteabschnitt 21 verhindert, dass sich die Hülse 44 mittels einer zur Ventilachse parallelen und vom Ventilschaftkörper 84 weg orientierten ersten Relativbewegung vom Ventilfuß 74 löst. Der Innendurchmesser der Hülse 44 ist gleich oder etwas größer als der maximale Außendurchmesser des Ventilfußes 74. Weiters ist die Hülse 44 durch einen Zwischenabschnitt des Ventilfußes 74 mit zylindrischem Außenumfang nicht nur reibschlüssig gegen Verschieben entlang der Ventilachse fixiert, sondern auch gegen ein Verkippen in Bezug auf die Ventilachse abgestützt.

Die Besonderheit der in Figur 4 dargestellten Ausführungsform gegenüber den vorgenannten Ausführungsformen gemäß Figuren 1 oder 2 besteht darin, dass die Hülse 44 zusätzlich zum ersten Halteabschnitt 21 über einen zweiten Halteabschnitt 22 verfügt, der analog zum ersten Halteabschnitt den freien Querschnitt im Inneren der Hülse 44 verkleinert, jedoch einen geringeren freien Querschnitt als der erste Halteabschnitt aufweist. Dieser zweite Halteabschnitt wirkt zusammen mit einem hierzu korrespondierenden zweiten Halteabschnitt des Ventilfuß 74 am verdickten Ventilfuß-Ende. Dieser zweite Halteabschnitt 22 schließt an das in Bezug auf den ersten Halteabschnitt 21 distale bzw. gegenüberliegende zweite Ende des vorgenannten Zwischenabschnittes des Ventilfußes 74 an. Der erste Halteabschnitt 21 und der zweite Halteabschnitt 22 bilden somit eine den Ventilfuß 74 in Bezug auf die Ventilachse beidseitig umgreifende Halterung, die eine Relativbewegung zwischen Hülse 44 und Ventilfuß 74 in beiden axialen Richtungen längs zur Ventilachse verhindert und somit den Ventilfuß 74 unverrückbar in Bezug auf die Hülse positioniert. Das zweite Haltemittel 22 besteht aus einem flexiblen Material, so dass sich der Querschnitt des zweiten Haltemittels im Kontext der Montage des Ventilsystems beim Ziehen der Hülse über den Ventilfuß 74 zunächst aufweitet und bei Erreichen der bestimmungsgemäßen Positionierung der Hülse 44 in Bezug auf den Ventilfuß 74 in der Art eines "Schnappmechanismus" in seine Ausgangsform zurückfedert. Eine weitere Besonderheit der in Figur 4 dargestellten Ausführungsform gegenüber den vorgenannten Ausführungsformen gemäß Figuren 1 oder 2 besteht darin, dass die Hülse 44 an ihrem distalen zweiten Ende einen dritten Halteabschnitt in der Form eines den Außenumfang der Hülse vergrößernden Halterands 23 aufweist. Dieser verhindert eine axiale Bewegung der Einlage 54 in Richtung auf das zweite Ende der Hülse.

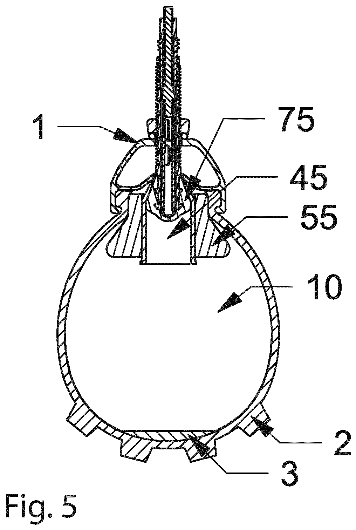

In Figur 5 ist eine fünfte Ausführungsform des erfindungsgemäßen Ventilsystems dargestellt. Bei diesem ist in Abwandlung zu der in Figur 4 dargestellten vierten Ausführungsform die Hülse 45 so weit über den Ventilfuß 75 in Richtung des Ventilschaftkörpers verlängert, dass die Hülse 45 bei einem in ein schlauchloses Rad eingebauten Ventilsystem zwischen Ventilfuß 75 und Felge 1 geklemmt wird und auf diese Weise eine Abdichtung des Reifen-/Felgenvolumens 10 gegen die Felge 1 im Bereich des Ventilsystems erfolgt.

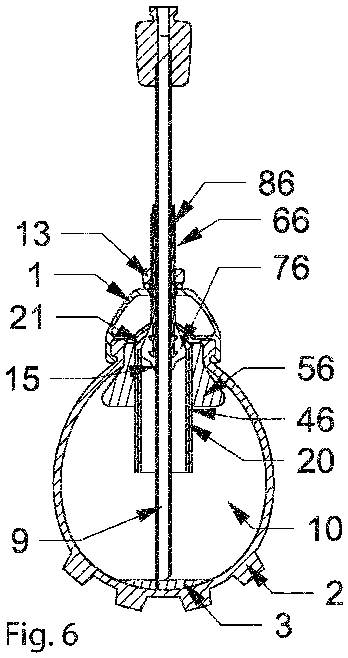

In Figur 6 ist eine sechste Ausführungsform des erfindungsgemäßen Ventilsystems dargestellt. Dieses ist in ein schlauchloses Rad eingebaut, welches eine Felge 1, einen Reifen 2 sowie eine Durschlagschutz-Einlage 56 umfasst. Die Felge 1 und der Mantel des Reifens 2 umschließen ein Reifen-/Felgenvolumen 10, welches mittels eines flüssigen Dichtmittels 3 von innen her gegen Luftaustritt abdichtbar ist. Die Durchschlagschutz-Einlage 56 weist - analog wie bei der in Figur 4 dargestellten Einlage 54 - einen kompakten Querschnitt auf, der sich auch in einen Teilbereich zwischen den Felgenhörnern erstreckt und dort die Wülste des Reifens 2 gegen die Felgenhörner fixiert. Analog wie bei allen vorgenannten Ausführungsformen umfasst auch das Ventilsystem 66 einen Ventilschaftkörper 86, einen Ventilfuß 76 sowie eine Hülse 46, welche durch den gesamten Querschnitt der Durchschlagschutz-Einlage 56 geführt ist und auf diese Weise eine Verlängerung des Ventilsystems entlang der Ventilachse durch die Durchschlagschutz-Einlage 56 ausbildet. Zu diesem Zweck weist die Durchschlagschutz-Einlage 56 Durchgangsöffnungen auf, deren Abmessungen an die Maße der Hülse 46 angepasst sind. Die Hülse 46 ist an ihrem ersten Ende mittels eines sich zum Ventilfuß 76 hin verjüngenden kegelstumpfförmigen ersten Halteabschnittes 21 formschlüssig mit dem Ventilfuß 76 verbunden. Dieser vorgenannte erste Halteabschnitt 21 verhindert, dass sich die Hülse 46 mittels einer zur Ventilachse parallelen und vom Ventilschaftkörper 86 weg orientierten ersten Relativbewegung vom Ventilfuß 76 löst. Die Besonderheit der in Figur 6 dargestellten Ausführungsform gegenüber den vorgenannten Ausführungsformen besteht darin, dass die Hülse 46 mittels eines innenliegenden, ebenfalls hülsenförmigen Stützkörpers 20 verstärkt ist. Zur Erhöhung der Stabilität und zur Verbesserung der Stützwirkung des Stützkörpers 20 weist die Hülse 46 eine vergrößerte Längserstreckung auf. Der Stützkörper 20 besteht aus einem Material mit einem höheren Elastizitätsmodul, z.B. einem Hartgummi mit Shore-Härte 50D, der eine formstabilisierende Wirkung auf die (weichere) Hülse ausübt. Hingegen besteht die Hülse 46 aus einem Material mit einem niedrigeren Elastizitätsmodul, z.B. einem Weichgummi mit Shore-Härte 45A, der gute Formschluss-Eigenschaften im Kontakt-Bereich mit dem Ventilfuß 76 aufweist und eine leichte Montierbarkeit der Hülse 46 am Ventilfuß 76 ermöglicht.

Ferner ist in Figur 6 ein Werkzeug zum Absaugen des flüssigen Dichtmittels 3 aus dem Reifen-/Felgenvolumen 10 dargestellt. Das Dichtmittel 3 hat sich unter Einfluss der Schwerkraft an der tiefsten Stelle des Rades gesammelt; das Rad ist in einer Stellung gezeigt, bei der sich das Ventilsystem 66 in Bezug auf den Radumfang in näherungsweiser "6 Uhr-Position" befindet (d.h. also ebenfalls in der tiefsten Stellung). Zur Herstellung der Durchgängigkeit für eine Hohlnadel 9 dieses vorgenannten Werkzeugs ist das Ventilherz aus dem Ventilsystem 65 entfernt, die Ventilklappen 15 sind durch die hindurch geführte Hohlnadel 9 in geöffneter Stellung fixiert.

Es ist allen vorgenannten Ausführungsbeispielen gemeinsam, dass das Ventilsystem auch ein Ventilherz 12 umfasst und mittels einer auf einem Außengewinde des Ventilschaftkörpers schraubbaren Mutter 13 in Richtung der Ventilachse gegen die Felge 1 gekontert ist. In hierzu entgegengesetzter Richtung ist das Ventilsystem durch die sich entlang der Ventilachse A verdickende Außenkontur des Ventilfuß gegen die Felge 1 gehalten. Ferner verfügt das in allen Ausführungsbeispielen gezeigte Ventilsystem in aus dem Stand der Technik bekannter Weise über Ventilklappen 15 aus Gummi, die an der in Richtung auf das Reifen-/Felgenvolumen 10 orientierten Unterseite jedes Ventilfußes angeordnet sind und eine Sicherung des Rades gegen Luftverlust bei aus dem Ventilsystem entfernten Ventilherzen ausbilden.

Eine mögliche Vorgehensweise zur Montage des erfindungsgemäßen Ventilsystems in einem schlauchlosen Rad besteht darin, in einem ersten Schritt den mit dem Ventilfuß versehenen Ventilschaftkörper durch die Hülse zu schieben und die Hülse mit dem Ventilfuß zu verbinden (dieser erste Schritt entfällt natürlich bei einteiliger Ausführung von Ventilfuß und Hülse). In einem zweiten Schritt wird das Ventilsystem (zusammen mit der Hülse) durch die hierfür vorgesehene Ausnehmung der Durchschlagschutz-Einlage gezogen. Im dritten und letzten Schritt wird die auf diese Weise gebildete Baugruppe in das Reifen-/Felgenvolumen des Rades eingelegt, wobei der Ventilschaftkörper von der Felgen-Innenseite her durch die Ventilausnehmung der Felge geführt und dort mittels einer schraubbaren Mutter 13 von der Felgen-Außenseite her gegen die Felge fixiert wird. Hierzu alternativ kann das Ventilsystem (zusammen mit der Hülse) durch die Ausnehmung einer bereits im Reifen-/Felgenvolumen des Rades montierten Durchschlagschutz-Einlage gezogen werden.

### Bezugszeichenliste

- 1: Felge
- 2: Reifen
- 3: Dichtmittel
- 4: Hülse
- 42, 43, 44, 45, 46: Hülse des zweiten, dritten, vierten, fünften bzw. sechsten Ausführungsbeispiels
- 5: Durchschlagschutz-Einlage
- 52, 54, 55, 56: Durchschlagschutz-Einlage des zweiten, vierten, fünften bzw. sechsten Ausführungsbeispiels
- 6: Ventilsystem
- 62, 64, 66: Ventilsystem des zweiten, vierten bzw. sechsten Ausführungsbeispiels
- 72, 73, 74, 75, 76: Ventilfuß des zweiten, dritten, vierten, fünften bzw. sechsten Ausführungsbeispiels
- 82, 84, 86: Ventilschaftkörper des zweiten, vierten bzw. sechsten Ausführungsbeispiels
- 9: Hohlnadel
- 10: Reifen-/Felgenvolumen
- 12: Ventilherz
- 13: Mutter
- 15: Ventilklappen
- 20: Stützkörper
- 21: erster Halteabschnitt
- 22: zweiter Halteabschnitt
- 23: Halterand
- A: Ventilachse

## Patentansprüche

1. Ventilsystem (6, 62, 64, 66) für ein schlauchloses Rad, wobei das Rad eine Felge (1) und einen Reifen (2), welche ein mit Luft befüllbares Reifen-/Felgenvolumen (10) ausbilden, sowie eine innerhalb des Reifen-/Felgenvolumens (10) angeordnete Durchschlagschutz-Einlage (5, 52, 54, 55, 56) umfasst, wobei das Ventilsystem einen sich entlang einer Ventilachse (A) erstreckenden Ventilschaftkörper (82, 84, 86) mit einem ersten Ende und einem zweiten Ende sowie einem an diesem zweiten Ende anschließenden Ventilfuß (72, 73, 74, 75, 76) umfasst, wobei sich das zweite Ende in dem Reifen-/Felgenvolumen (10) befindet, wenn das Ventilsystem (6, 62, 64, 66) am Rad montiert ist,
**dadurch gekennzeichnet, dass**
der Ventilfuß einen sich stetig entlang der Ventilachse (A) in Richtung auf das Reifen-/Felgenvolumen vergrößernden Außenumfang unter Ausbildung eines verdickten Ventilfuß-Endes aufweist,
und das Ventilsystem (6, 62, 64, 66) ferner eine Hülse (4, 42, 43, 44, 45, 46) mit einem ersten Ende und einem zweiten Ende umfasst, wobei das erste Ende der Hülse (4, 42, 43, 44, 45, 46) am verdickten Ventilfuß-Ende (72, 73, 74, 75, 76) anschließt und sich die Hülse (4, 42, 43, 44, 45, 46) von dort entlang der Ventilachse in einer vom Ventilschaftkörper (82, 84, 86) weg orientierten Richtung erstreckt.

2. Ventilsystem (6, 62, 64, 66) für ein schlauchloses Rad nach Anspruch 1, **dadurch gekennzeichnet, dass** das erste Ende der Hülse (4, 42, 44, 45, 46) formschlüssig mit dem Ventilfuß (72, 74, 75, 76) verbunden ist.

3. Ventilsystem (6, 62, 64, 66) für ein schlauchloses Rad nach Anspruch 1 oder 2, **dadurch gekennzeichnet, dass** das erste Ende der Hülse (4, 42, 44, 45, 46) einen sich konisch zum Ventilfuß (72, 74, 75, 76) hin verjüngenden Halteabschnitt (21) aufweist.

4. Ventilsystem für ein schlauchloses Rad nach Anspruch 1, **dadurch gekennzeichnet, dass** das erste Ende der Hülse kraftschlüssig mit dem Ventilfuß verbunden ist.

5. Ventilsystem für ein schlauchloses Rad nach Anspruch 1, **dadurch gekennzeichnet, dass** die Hülse (43) und der Ventilfuß (73) einteilig ausgeführt sind.

6. Ventilsystem (6, 64) für ein schlauchloses Rad nach einem der Ansprüche 1 bis 5, **dadurch gekennzeichnet, dass** die Hülse (4, 44) einen zum ersten Ende der Hülse (4, 44) und in Richtung auf das zweite Ende der Hülse (4, 44) hin beabstandeten zweiten Halteabschnitt (22) mit einem in Bezug auf den ersten Halteabschnitt der Hülse verkleinerten freien Querschnitt im Inneren der Hülse aufweist.

7. Ventilsystem (66) für ein schlauchloses Rad nach einem der Ansprüche 1 bis 6, **dadurch gekennzeichnet, dass** die Hülse (46) mittels eines Stützkörpers (20) ausgesteift ist.

8. Ventilsystem (6, 64) für ein schlauchloses Rad nach einem der Ansprüche 1 bis 7, **dadurch gekennzeichnet, dass** das zweite Ende der Hülse (4, 44, 45) einen den Außenumfang der Hülse (4, 44, 45) vergrößernden Halterand (23) aufweist.

9. Schlauchloses Rad mit einem Ventilsystem (6, 62, 64, 66) nach einem der Ansprüche 1 bis 8.

## Claims

1. Valve system (6, 62, 64, 66) for a tubeless wheel, the wheel comprising a rim (1) and a tire (2) which form an air-filled tyre/rim volume (10), as well as an impact protection inlay (5, 52, 54, 55, 56) arranged inside the tire/rim volume (10), wherein the valve system comprises a valve stem body (82, 84, 86) extending along a valve axis (A) with a first end and a second end and a valve stem base (72, 73, 74, 75, 76) adjoining said second end, the second being positioned in the tire/rim volume (10), when the valve system (6, 62, 64, 66) is mounted on the wheel,
**characterized in that**
the valve stem base has an outer circumference which increases continuously along the valve axis (A) in the direction of the tire/rim volume, forming a thickened valve stem base end,
and the valve system (6, 62, 64, 66) further comprises a sleeve (4, 42, 43, 44, 45, 46) with a first end and a second end, wherein the first end of the sleeve (4, 42, 43, 44, 45, 46) is connected to the thickened end of the valve stem base (72, 73, 74, 75, 76) and the sleeve (4, 42, 43, 44, 45, 46) extends from there along the valve axis in a direction oriented away from the valve stem body (82, 84, 86).

2. Valve system (6, 62, 64, 66) for a tubeless wheel according to claim 1, **characterized in that** the first end of the sleeve (4, 42, 44, 45, 46) is connected in a form-fitting manner to the valve stem base (72, 74, 75, 76).

3. Valve system (6, 62, 64, 66) for a tubeless wheel according to claim 1 or 2, **characterized in that** the first end of the sleeve (4, 42, 44, 45, 46) has a retaining section (21) that tapers conically toward the valve stem base (72, 74, 75, 76).

4. Valve system for a tubeless wheel according to claim 1, **characterized in that** the first end of the sleeve is connected to the valve stem base in a force-fitting manner.

5. Valve system for a tubeless wheel according to claim 1, **characterized in that** the sleeve (43) and the valve stem base (73) are formed of one piece.

6. Valve system (6, 64) for a tubeless wheel according to one of claims 1 to 5, **characterized in that** the sleeve (4, 44) has a second retaining section (22) spaced apart from the first end of the sleeve (4, 44) and in the direction of the second end of the sleeve (4, 44), with a free cross-section inside the sleeve that is reduced in size with respect to the first retaining section of the sleeve.

7. Valve system (66) for a tubeless wheel according to one of claims 1 to 6, **characterized in that** the sleeve (46) is stiffened by means of a support body (20).

8. Valve system (6, 64) for a tubeless wheel according to one of claims 1 to 7, **characterized in that** the second end of the sleeve (4, 44, 45) has a retaining edge (23) which enlarges the outer circumference of the sleeve (4, 44, 45).

9. Tubeless wheel with a valve system (6, 62, 64, 66) according to any of claims 1 to 8.

## Revendications

1. Système de valve (6, 62, 64, 66) pour une roue sans chambre à air, la roue comportant une jante (1) et un pneu (2) qui forment un espace pneu/jante (10) pouvant être rempli d'air, ainsi qu'une couche de protection anti-crevaison (5, 52, 54, 55, 56) disposée à l'intérieur de l'espace pneu/jante (10), le système de valve comprenant un corps de tige de valve (82, 84, 86) s'étendant le long d'un axe de valve (A) avec une première extrémité et une deuxième extrémité ainsi qu'un pied de valve (72, 73, 74, 75, 76) raccordé à cette deuxième extrémité, la deuxième extrémité se trouvant dans l'espace pneu/jante (10) lorsque le système de valve (6, 62, 64, 66) est monté sur la roue,
**caractérisé en ce que**
le pied de valve présente un pourtour extérieur qui s'élargit progressivement le long de l'axe de valve (A) en direction de l'espace pneu/jante, en formant une extrémité de pied de valve épaissie,
et le système de valve (6, 62, 64, 66) comprend en outre une douille (4, 42, 43, 44, 45, 46) avec une première extrémité et une deuxième extrémité, la première extrémité de la douille (4, 42, 43, 44, 45, 46) étant raccordée à l'extrémité épaissie (72, 73, 74, 75, 76) de la tige de valve et la douille (4, 42, 43, 44, 45, 46) s'étendant à partir de là le long de l'axe de valve (A) dans une direction s'éloignant du corps de tige de valve (82, 84, 86).

2. Système de valve (6, 62, 64, 66) pour une roue sans chambre à air selon la revendication 1, **caractérisé en ce que** la première extrémité de la douille (4, 42, 44, 45, 46) est reliée par complémentarité de forme au pied de valve (72, 74, 75, 76).

3. Système de valve (6, 62, 64, 66) pour une roue sans chambre à air selon la revendication 1 ou 2, **caractérisé en ce que** la première extrémité de la douille (4, 42, 44, 45, 46) présente une partie de retenue (21) qui se rétrécit de manière conique vers le pied de valve (72, 74, 75, 76).

4. Système de valve pour une roue sans chambre à air selon la revendication 1, **caractérisé en ce que** la première extrémité de la douille est reliée de manière solidaire au pied de valve.

5. Système de valve pour une roue sans chambre à air selon la revendication 1, **caractérisé en ce que** la douille (43) et le pied de valve (73) sont réalisés d'une seule pièce.

6. Système de valve (6, 64) pour une roue sans chambre à air selon l'une des revendications 1 à 5, **caractérisé en ce que** la douille (4, 44) présente une deuxième partie de retenue (22) espacée de la première extrémité de la douille (4, 44) et orientée vers la deuxième extrémité de la douille (4, 44), avec une section libre à l'intérieur de la douille qui est réduite par rapport à la première partie de retenue de la douille.

7. Système de valve (66) pour une roue sans chambre à air selon l'une des revendications 1 à 6, **caractérisé en ce que** la douille (46) est rigidifiée au moyen d'un corps de support (20).

8. Système de valve (6, 64) pour une roue sans chambre à air selon l'une des revendications 1 à 7, **caractérisé en ce que** la deuxième extrémité de la douille (4, 44, 45) présente un rebord de retenue (23) qui agrandit la circonférence extérieure de la douille (4, 44, 45).

9. Roue sans chambre à air avec un système de valve (6, 62, 64, 66) selon l'une des revendications 1 à 8.
